# EUROPEAN PATENT APPLICATION

(11) **EP 4 725 287 A1**
(43) Date of publication of application: **15.04.2026**
(21) Application number: 24818469.9
(22) Date of filing: 16.05.2024
(51) Int. Cl.: A01D 34/84

(54) **LAWN MOWER**

(30) Priority: 07.06.2023 CN 202321451082 U
(71) Applicant: Shenzhen Mammotion Innovation Co., Limited, Shenzhen, Guangdong 518000 (CN)
(72) Inventor: WEI, Jidong, Shenzhen, Guangdong 518000 (CN); XU, Yuanjun, Shenzhen, Guangdong 518000 (CN); LAI, Chuanhua, Shenzhen, Guangdong 518000 (CN)
(74) Representative: Huang, Liwei
(86) International application number: PCT/CN2024/093723
(87) International publication number: WO 2024/250936

(57) **Abstract**

A lawn mower, comprising a mower body, an edge trimming assembly, and an elastic assembly. A side of the mower body is provided with an arcuate groove and a fixing portion. The edge trimming assembly includes a mounting bracket provided with a connecting portion, and the connecting portion extends into the arcuate groove. Two ends of the elastic assembly are movably connected to the fixing portion and the connecting portion, respectively. The elastic assembly continuously provides an elastic force toward the connecting portion so as to drive the edge trimming assembly to switch toward an unfolded state or a folded state. The elastic assembly is further configured to buffer an impact applied to the edge trimming assembly.

## Description

### TECHNICAL FIELD

The present disclosure relates to the technical field of mowing equipment, and more particularly to a lawn mower.

### BACKGROUND

With the continuous improvement of living standards, people have increasingly higher requirements for leisure environments. Private gardens, parks, playgrounds, and similar venues have become ideal places for leisure and recreation. At present, lawn mowing robots are commonly used to replace manual labor for trimming operations, performing periodic or non-periodic maintenance of lawns in private gardens, parks, and playgrounds to maintain an aesthetically pleasing appearance.

However, due to safety regulations, the body of the lawn mower is slightly wider than its mowing mechanism, resulting in the mower being unable to completely cut the grass located at edges or corners when trimming boundary areas or corners. This leads to incomplete cutting in those regions and adversely affects the trimming quality along the edges and corners.

### SUMMARY

The present disclosure provides a lawn mower that not only enables cutting of grass located at boundary or corner areas through a edge trimming assembly, but also buffers impacts applied to the edge trimming assembly through an elastic assembly. The edge trimming assembly can further be converted from an unfolded state to a folded state, thereby preventing damage to the edge trimming assembly caused by rigid collision and providing improved protection.

The present disclosure provides a lawn mower, comprising:
a mower body, comprising a mounting site at a side of the body, the mounting site being provided with an arcuate groove and a fixing portion;
an edge trimming assembly, comprising a mounting bracket, the mounting bracket being provided with a connecting portion, the connecting portion extending into the arcuate groove and being configured to slide in the arcuate groove so as to drive the edge trimming assembly to switch between an unfolded state and a folded state; and
an elastic assembly, two ends of the elastic assembly being movably connected to the fixing portion and the connecting portion, respectively, wherein the elastic assembly continuously provides an elastic force in a direction of the connecting portion so as to drive the edge trimming assembly to switch toward the unfolded state or the folded state.

In this way, when the edge trimming assembly collides with an obstacle or is subjected to an external force, the edge trimming assembly, under the action of the arcuate groove and the elastic assembly, is capable of automatically converting from the unfolded state to the folded state after rotating through a certain angle, thereby avoiding rigid collision and potential damage to the edge trimming assembly. At the same time, the elastic assembly provides a buffering effect for the edge trimming assembly, effectively enhancing the operational safety of the lawn mower.

In some embodiments, the arcuate groove comprises a first groove and a second groove disposed opposite to the first groove, the first groove and the second groove being concentric and spaced apart, and wherein the connecting portion comprises a first connecting post and a second connecting post, the first connecting post and the second connecting post being respectively disposed corresponding to the first groove and the second groove so as to movably mount the mounting bracket on the mounting position.

In this way, the mounting bracket can be correspondingly mounted in the first groove and the second groove through the first connecting post and the second connecting post. After the mounting bracket is installed at the mounting position, the mounting bracket can rotate relative to the mounting position through the cooperation of the first connecting post with the first groove and the second connecting post with the second groove, providing stable mounting and limiting the rotational angle of the mounting bracket.

In some embodiments, the elastic assembly comprises an elastic member, a first connecting member, and a second connecting member sleeved over the first connecting member, the first connecting member being connected to the fixing portion, the second connecting member being connected to the connecting portion, and the elastic member being disposed between the first connecting member and the second connecting member.

In this way, the elastic member can be accommodated between the first connecting member and the second connecting member. When the first connecting member and the second connecting member are connected to the fixing portion and the connecting portion, respectively, the elastic member continuously provides an elastic force in a direction of the connecting portion so as to drive the edge trimming assembly to convert between the unfolded state and the folded state, while the first connecting member and the second connecting member serve to connect and support the elastic member.

In some embodiments, the mounting position is provided with a limiting portion, the limiting portion being located on two sides of a movement direction of the mounting bracket.

In this way, when the mounting bracket rotates relative to the mounting position, the limiting portion can restrict the rotational range of the mounting bracket, thereby preventing the connecting portion from colliding with an end of the arcuate groove, avoiding breakage of the connecting portion, and protecting the connecting portion.

In some embodiments, the mounting position comprises a first surface and a second surface that are arranged opposite to each other, the limiting portion being disposed on the first surface, and the fixing portion being disposed on the second surface.

In this way, the limiting portion and the fixing portion can be disposed on opposite surfaces of the mounting position, which facilitates the mold design of the mounting bracket and prevents interference between the limiting portion and the fixing portion. It also facilitates installation of the mounting bracket and the elastic assembly, that is, the mounting bracket can be mounted on the first surface and the elastic assembly can subsequently be mounted on the second surface.

In some embodiments, the mounting position is provided with a flange, the flange being disposed around an outer circumferential side of the arcuate groove.

In this way, the cooperation area between the connecting portion and the arcuate groove can be increased, thereby improving stability when the mounting bracket rotates. At the same time, the contact area between the connecting portion and the second surface can be reduced, as the connecting portion can directly contact the flange, effectively reducing the frictional area during the sliding motion of the connecting portion relative to the arcuate groove.

In some embodiments, the edge trimming assembly comprises a cutter, the cutter being mounted on the mounting bracket and protruding out of the mounting position.

In this way, the cutter can be controlled to cut grass located at boundaries or corners when the lawn mower is operating.

In some embodiments, the edge trimming assembly further comprises a drive motor configured to drive the cutter to perform cutting, the mounting position being provided with a mounting hole, the mounting hole being disposed concentrically with the arcuate groove, and the drive motor extending through the mounting hole.

In this way, the cutter can be driven to perform cutting through the drive motor, and the drive motor can be accommodated in the mounting hole, thereby protecting the drive motor and preventing it from colliding with obstacles during the cutting process.
the lawn mower further comprises a switch member, the switch member being disposed on the mounting position and electrically connected to the edge trimming assembly, the switch member cooperating with the edge trimming assembly to stop operation of the edge trimming assembly when the edge trimming assembly switches to the folded state, and to resume operation of the edge trimming assembly when the edge trimming assembly switches to the unfolded state

In this way, the switch member can control the edge trimming assembly to stop operating when in the folded state and to resume operation when in the unfolded state, thereby providing protection, reducing power consumption, and preventing unnecessary operation of the edge trimming assembly.

In some embodiments, the switch member is disposed at an end of the arcuate groove, the connecting portion being provided with an elastic piece, the elastic piece being configured to cooperate with a switch contact of the switch member.

In this way, the switch contact of the switch member can be buffered, thereby preventing the connecting portion from directly colliding with the switch contact and improving the service life of the switch member.

The specific operating principle of the technical solution provided in the embodiments of the present disclosure is as follows:

One end of the elastic assembly is connected to the fixing portion on the mounting position to provide support, while the other end is connected to the connecting portion that extends through the arcuate groove, so that the elastic assembly continuously provides an elastic force acting on one end of the connecting portion.

When the edge trimming assembly is in the unfolded state and subjected to an external force to transition toward the folded state, due to the constraint of the arcuate groove, the connecting portion moves closer to the fixing portion as it slides in the arcuate groove, thereby compressing the elastic assembly. After the connecting portion slides a certain distance-that is, after the edge trimming assembly rotates through a certain angle-the connecting portion, under the guidance of the arcuate groove and the elastic force of the elastic assembly, automatically slides toward the other end of the arcuate groove, causing the edge trimming assembly to automatically convert to the folded state.

In this way, when the edge trimming assembly collides with an obstacle or is subjected to an external force, it can automatically convert from the unfolded state to the folded state after rotating through a certain angle, thereby preventing rigid collision that may damage the edge trimming assembly or cause harm to surrounding objects. Meanwhile, when the rotation angle of the edge trimming assembly is smaller than a preset angle, it automatically returns to the unfolded state. The elastic assembly provides a buffering effect for the edge trimming assembly, effectively improving the operational safety of the lawn mower.

It should be understood that the foregoing general description and the following detailed description are merely exemplary and explanatory, and are not intended to limit the present disclosure.

### BRIEF DESCRIPTION OF THE DRAWINGS

In order to more clearly illustrate the technical solutions of the embodiments of the present disclosure, the drawings required for the description of the embodiments are briefly introduced below. It should be apparent that the drawings described below show only some embodiments of the present disclosure, and that those of ordinary skill in the art may derive other drawings based on these drawings without any inventive effort.
FIG. 1 is a schematic structural diagram of a lawn mower in which the edge trimming assembly is in the unfolded state according to the present disclosure.
FIG. 2 is an enlarged schematic view of portion A in FIG. 1.
FIG. 3 is a schematic structural diagram of a lawn mower in which the edge trimming assembly is in the folded state according to the present disclosure.
FIG. 4 is an enlarged schematic view of portion B in FIG. 3.
FIG. 5 is an exploded schematic diagram of the lawn mower according to the present disclosure.
FIG. 6 is a partial structural schematic diagram of the lawn mower shown in FIG. 5.
FIG. 7 is a perspective structural schematic diagram of the elastic assembly according to the present disclosure.
FIG. 8 is a sectional structural schematic diagram of the elastic assembly according to the present disclosure.
FIG. 9 is a structural schematic diagram of the edge trimming assembly shown in FIG. 5.

Reference numerals: 100, mower body; 101, mounting site; 101a, first surface; 101b, second surface; 1011, arcuate groove; 1011a, first groove; 1011b, second groove; 1012, mounting hole; 1013, fixing portion; 1014, limiting portion; 1015, flange; 200, edge trimming assembly; 10, mounting bracket; 11, motor fixing portion; 12, connecting portion; 12a, first connecting post; 12b, second connecting post; 20, cutter; 30, drive motor; 300, elastic assembly; 301, first connecting member; 3011, first accommodating cavity; 302, second connecting member; 3021, second accommodating cavity; 40, housing; 400, switch member.

### DESCRIPTION OF EMBODIMENTS

The technical solutions of the embodiments of the present disclosure will be clearly and fully described below with reference to the accompanying drawings. It is apparent that the embodiments described herein are only part of the embodiments of the present disclosure, rather than all embodiments. Based on the embodiments of the present disclosure, all other embodiments that may be obtained by those of ordinary skill in the art without inventive effort shall fall within the scope of protection of the present disclosure.

It should also be understood that the terminology used in the present specification is for the purpose of describing particular embodiments only and is not intended to limit the present disclosure. In the description of the present disclosure, the terms "central," "longitudinal," "lateral," "length," "width," "thickness," "upper," "lower," "front," "rear," "left," "right," "vertical," "horizontal," "top," "bottom," "inner," "outer," "clockwise," "counterclockwise," and the like are used to indicate orientation or positional relationships based on the orientation or positional relationships shown in the drawings. These terms are merely for facilitating the description of the present disclosure and simplifying the description, and are not intended to indicate or imply that the referenced devices or elements must have a particular orientation or be constructed and operated in a particular orientation; therefore, they should not be construed as limiting the present disclosure. In addition, the terms "first" and "second" are used for descriptive purposes only and should not be construed as indicating or implying relative importance or implicitly specifying the number of the indicated features. Thus, features designated as "first" or "second" may expressly or implicitly include one or more such features. In the description of the present disclosure, the term "plurality" means two or more, unless otherwise specifically defined.

The embodiments of the present disclosure are described in detail below with reference to the accompanying drawings. Where there is no conflict, the features of the embodiments and the embodiments themselves may be combined with one another.

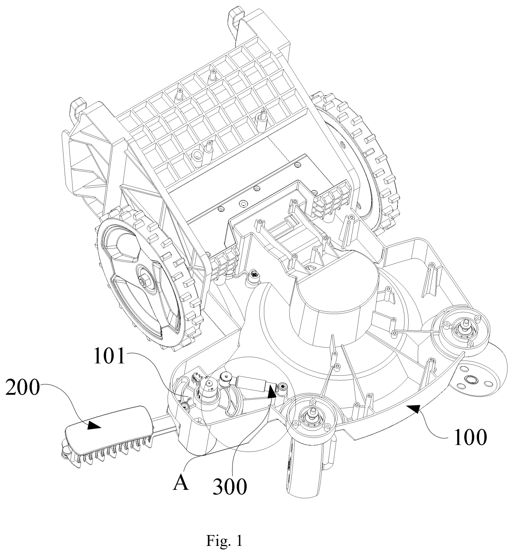

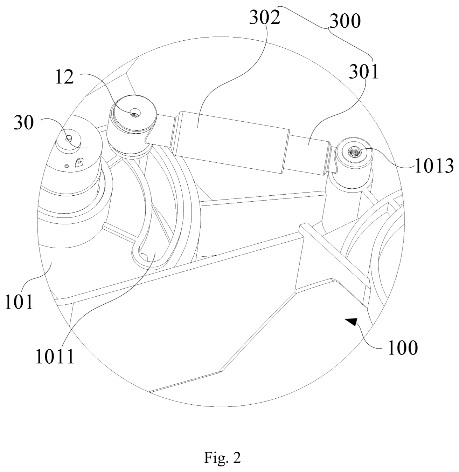

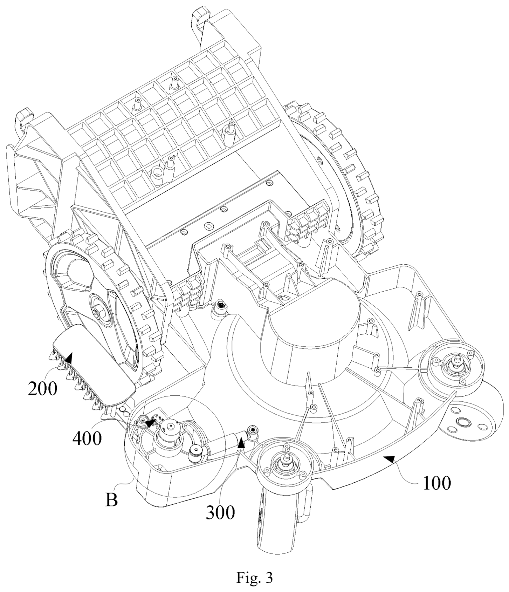

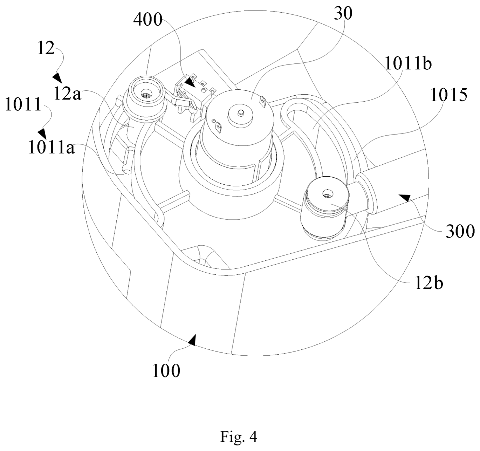

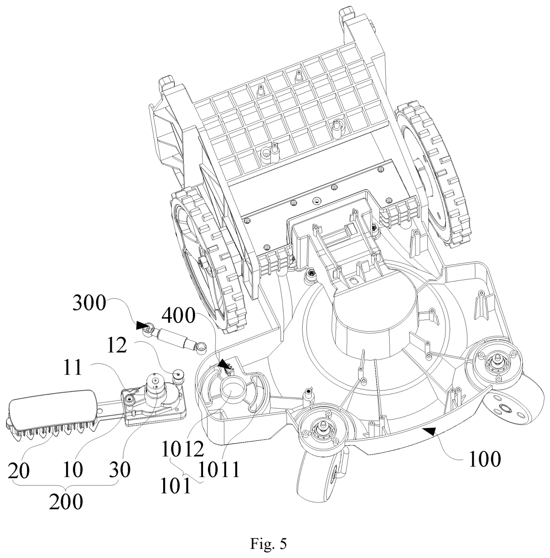

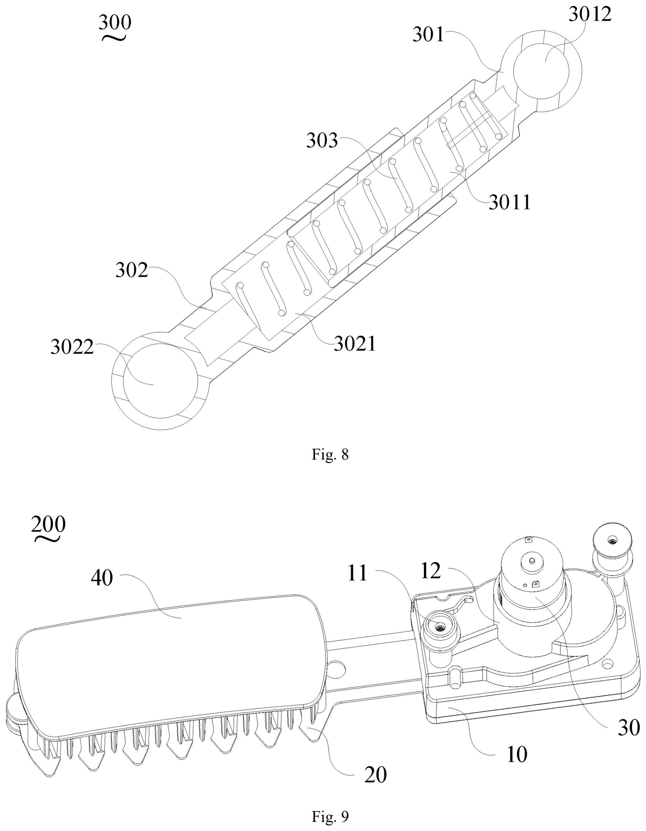

As shown in FIGS. 1 to 9, the present disclosure provides a lawn mower comprising a mower body 100, an elastic assembly 300, and an edge trimming assembly 200. The edge trimming assembly 200 comprises a mounting bracket 10 mounted at a side of the body 100. The elastic assembly 300 is disposed between the mounting bracket 10 and the body 100 and is configured to buffer an impact force when the edge trimming assembly 200 collides with an obstacle while cutting grass located at boundaries or corners, or to drive the edge trimming assembly 200 to switch toward the unfolded state or the folded state, thereby preventing damage to the edge trimming assembly 200 and improving cutting performance at boundaries or corners.

By way of example, a mounting site 101 is provided at a side of the body 100. An arcuate groove 1011 and a fixing portion 1013 are provided at the mounting site 101. A connecting portion 12 is provided on the mounting bracket 10, and the connecting portion 12 is configured to extend into the arcuate groove 1011 to mount the mounting bracket 10 to the mounting site 101 without requiring additional components. When the mounting bracket 10 slides along the extending direction of the arcuate groove 1011, the mounting bracket 10 can switch between the unfolded state and the folded state.

By adopting the above technical solution, because the mounting bracket 10 is movably mounted in the arcuate groove 1011 through the connecting portion 12, and the connecting portion 12 is slidable in the arcuate groove 1011 so as to drive the edge trimming assembly 200 to switch between the unfolded state and the folded state, the installation of the edge trimming assembly 200 is simplified and does not require additional components. In addition, the cooperation between the connecting portion 12 and the arcuate groove 1011 can provide a limiting function, resulting in a simple and compact overall structure.

In one embodiment, the elastic assembly 300 is movably connected, at its opposite ends, to the fixing portion 1013 and the connecting portion 12, respectively, and continuously provides an elastic force in a direction of the connecting portion 12 so as to drive the edge trimming assembly 200 switch toward the unfolded state or the folded state. The elastic assembly 300 can also provide a buffering force when the edge trimming assembly 200 collides with an obstacle, thereby reducing the impact force applied to the edge trimming assembly 200, preventing damage to the edge trimming assembly 200, and prolonging its service life.

By way of example, the fixing portion 1013 is disposed between the two ends of the arcuate groove 1011 and located at one side of the arcuate groove 1011. When the edge trimming assembly 200 is in the unfolded state and comes into contact with an obstacle, and the impact force applied by the obstacle to the edge trimming assembly 200 is greater than the elastic force of the elastic assembly 300, the connecting portion 12 slides along the arcuate groove 1011 from one end toward a middle portion of the arcuate groove 1011, during which the elastic assembly 300 deforms to buffer the impact force and enables the edge trimming assembly 200 to avoid the obstacle by rotating toward the folded state. At the same time, as the edge trimming assembly 200 rotates relative to the mounting site 101 toward the folded state, the edge trimming assembly 200 can avoid the obstacle. After the connecting portion 12 passes the middle of the arcuate groove 1011, the elastic assembly 300 recovers from deformation and pushes the connecting portion 12 toward the other end of the arcuate groove 1011, enabling the edge trimming assembly 200 to quickly transition to the folded state. Alternatively, if the connecting portion 12 separates from the obstacle before sliding to the middle of the arcuate groove 1011, the elastic assembly 300 deforms and subsequently pushes the connecting portion 12 to return to its original position, i.e., the edge trimming assembly 200 switch back to the unfolded state.

By adopting the above technical solution, the arcuate groove 1011 provided at a side of the body 100 enables the edge trimming assembly 200 to be connected to the arcuate groove 1011 through the connecting portion 12, thereby facilitating installation. Meanwhile, the sliding displacement of the connecting portion 12 in the arcuate groove 1011 enables the rotational angle of the edge trimming assembly 200 to be limited and allows the edge trimming assembly 200 to switch between the unfolded state and the folded state.

In addition, because the elastic assembly 300 is connected between the edge trimming assembly 200 and the body 100 and is configured to maintain the edge trimming assembly 200 in either the unfolded state or the folded state, the elastic assembly 300 can buffer impact forces when the edge trimming assembly 200 collides with an obstacle, and can even allow the edge trimming assembly 200 to rotate into the folded state to avoid further collisions. This reduces the likelihood of damage to the edge trimming assembly 200 caused by collisions and improves its service life.

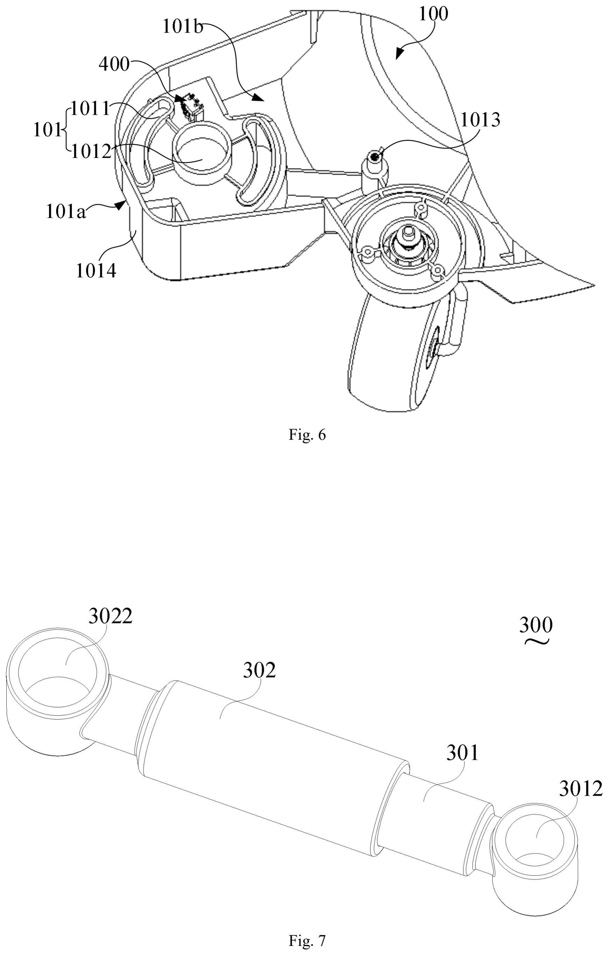

In an optional embodiment, as shown in FIGS. 1 and 6, the connecting portion 12 comprises a first connecting post 12a and a second connecting post 12b. The arcuate groove 1011 comprises a first groove 1011a and a second groove 1011b, wherein the second groove 1011b is disposed opposite to the first groove 1011a. The first connecting post 12a and the second connecting post 12b correspond to the first groove 1011a and the second groove 1011b, respectively, thereby movably mounting the mounting bracket 10 to the mounting site 101. In this way, not only can the force distribution of the edge trimming assembly 200 on the plane be balanced when it rotates relative to the mounting site 101, but uneven force on the connecting portion 12 caused by instability of the center of gravity during collision with an obstacle can also be prevented, thereby effectively improving the service life of the edge trimming assembly 200.

In an optional embodiment, the first groove 1011a and the second groove 1011b are concentric and spaced apart from one another. The first connecting post 12a and the second connecting post 12b extend through the first groove 1011a and the second groove 1011b, respectively, to movably mount the edge trimming assembly 200 to the mounting site 101. Meanwhile, the cooperation of the first connecting post 12a with the first groove 101la and the cooperation of the second connecting post 12b with the second groove 1011b jointly limit the rotational angle of the edge trimming assembly 200.

In an optional embodiment, the elastic assembly 300 comprises an elastic member 303, a first connecting member 301, and a second connecting member 302. The second connecting member 302 is sleeved over the first connecting member 301, and the elastic member 303 is disposed between the first connecting member 301 and the second connecting member 302 to provide a restoring elastic force to the first connecting member 301 or the second connecting member 302. In this embodiment, the first connecting member 301 is connected to the fixing portion 1013, and the second connecting member 302 is connected to the connecting portion 12, thereby maintaining the edge trimming assembly 200 in the unfolded state or the folded state.

By way of example, when the edge trimming assembly 200 is in the unfolded state, the body 100 can drive the edge trimming assembly 200 to cut grass located at a boundary or a corner. When the edge trimming assembly 200 collides with an obstacle, the elastic member 303 can buffer the impact force applied to the edge trimming assembly 200, and the edge trimming assembly 200 rotates to transition to the folded state under the impact force, thereby avoiding direct collision with the obstacle and preventing damage, which improves the service life of the edge trimming assembly 200.

In particular, the elastic member 303 elastically deforms when the edge trimming assembly 200 collides with an obstacle so as to absorb the impact force of the collision. Afterward, when the elastic member 303 returns from deformation, it can cause the edge trimming assembly 200 to transition to the unfolded state or to transition to the folded state.

In an optional embodiment, when the lawn mower performs mowing operations on grass areas such as private gardens, parks, or playgrounds, the lawn mower travels in an operating area along a planned path to perform mowing. The body 100 comprises a machine body and a mowing mechanism. Because the mowing mechanism must satisfy safety requirements, its width is smaller than that of the machine body. As a result, when cutting grass located at a boundary or a corner, the mowing mechanism cannot completely cut the grass at the boundary or the corner, thereby affecting the cutting performance at such boundary or corner.

In this application, the edge trimming assembly 200 is rotatably connected to the side of the body 100 so as to extend the mowing mechanism of the lawn mower and enable cutting of grass located at a boundary or a corner. Meanwhile, the edge trimming assembly 200 can adjust the extension width relative to the machine body based on the rotational angle of the mounting bracket 10 relative to the mounting site 101. This allows the edge trimming assembly 200 to form a suitable cutting width so as to cut grass at a boundary or a corner where the width is smaller than the extension length of the edge trimming assembly 200 from the body 100. Specifically, this can be achieved by allowing an operator to control a reduction in the rotational angle of the edge trimming assembly 200, or by allowing the boundary or the corner to apply a pressing force to the edge trimming assembly 200 to control its rotation. This application is not limited thereto.

Since contact between the edge trimming assembly 200 and obstacles during the cutting process is unavoidable, when the edge trimming assembly 200 encounters an obstacle such as a stone or a tree, the elastic assembly 300 can buffer the impact from the obstacle, thereby preventing damage to the edge trimming assembly 200. This buffering effect can also prevent injury to the operator by preventing fragments of the obstacle or portions of the cutter 20 from being thrown toward the operator after a collision. In addition, the elastic force provided by the elastic assembly 300 can increase the torque applied to plants that need to be cut, thereby improving trimming efficiency.

In an optional embodiment, the second connecting member 302 is provided with an accommodating cavity, and a portion of the first connecting member 301 is movably mounted in the accommodating cavity. The elastic member 303 is disposed in the accommodating cavity and abuts against an end of the first connecting member 301 that extends into the accommodating cavity, so as to absorb an impact applied to the edge trimming assembly 200 during a collision and prevent the edge trimming assembly 200 from being damaged by an obstacle, thereby providing a buffering effect. At the same time, the elastic member 303 can maintain the edge trimming assembly 200 in the unfolded state and provide a restoring force for returning the edge trimming assembly 200 to the unfolded state.

For example, when the impact force applied to the edge trimming assembly 200 by an obstacle is small and the edge trimming assembly 200 becomes separated from the obstacle, the elastic member 303 can provide a restoring force to return the edge trimming assembly 200. When the impact force applied to the edge trimming assembly 200 is large, such that the connecting portion 12 passes the midpoint of the arcuate groove 1011, or the edge trimming assembly 200 is pushed past the midpoint of the arcuate groove 1011 by the obstacle, the elastic member 303 returns from deformation and drives the edge trimming assembly 200 to quickly transition to the folded state, thereby preventing continued contact between the edge trimming assembly 200 and the obstacle.

In an optional embodiment, the first connecting member 301 is provided with a first accommodating cavity 3011, and the second connecting member 302 is provided with a second accommodating cavity 3021. The first connecting member 301 is movably mounted in the second accommodating cavity 3021, and the elastic member 303 is disposed in the first accommodating cavity 3011 and the second accommodating cavity 3021, thereby increasing the energy-storage and buffering capability of the elastic member 303 and ensuring the overall compactness of the elastic assembly 300, with the elastic member 303 being concealed in the first accommodating cavity 3011 and the second accommodating cavity 3021.

In an optional embodiment, the mounting site 101 is provided with a limiting portion 1014, and the limiting portion 1014 is located at both ends of a movement path of the mounting bracket 10 so as to prevent the mounting bracket 10 from rotating beyond the limiting portion 1014 and to prevent the connecting portion 12 from being broken.

By way of example, the body 100 is provided with a mounting groove, the arcuate groove 1011 is disposed at the top of the mounting groove, and the limiting portion 1014 is formed by stop blocks located at both ends of the mounting groove. When the mounting bracket 10 is mounted to the arcuate groove 1011 through the connecting portion 12 and moves in the mounting groove, the mounting bracket 10 can rotate only from one end of the mounting groove to the other end, that is, between the folded state and the unfolded state. In this case, the connecting portion 12 does not need to contact the end of the arcuate groove 1011 completely to achieve limiting, thereby preventing the connecting portion 12 from breaking.

It should be noted that the limiting portion 1014 may alternatively be implemented as a first stop block and a second stop block that are separately provided on the mounting site 101, and the mounting bracket 10 is rotatable between the first stop block and the second stop block. This disclosure is not limited thereto.

In an optional embodiment, the mounting site 101 comprises a first surface 101a and a second surface 101b that are disposed opposite each other. The limiting portion 1014 is provided on the first surface 101a, the fixing portion 1013 is provided on the second surface 101b, and the mounting bracket 10 is mounted on the first surface 101a. The arcuate groove 1011 penetrates both the first surface 101a and the second surface 101b, and the connecting portion 12 passes from the first surface 101a through the second surface 101b to mount the mounting bracket 10 to the mounting site 101. The elastic assembly 300 is connected to an end of the connecting portion 12 that extends out of the second surface 101b. This arrangement is reasonable in design, facilitates installation of the mounting bracket 10, and reduces the installation space required for the fixing portion 1013.

In an optional embodiment, the mounting site 101 is provided with a flange 1015 circumferentially disposed around an outer periphery of the arcuate groove 1011. An end of the connecting portion 12 extending out of the second surface 101b contacts the flange 1015, which reduces the contact area between the connecting portion 12 and the second surface 101b, while increasing the engagement area between the connecting portion 12 and the arcuate groove 1011, thereby enabling the connecting portion 12 to move stably in the arcuate groove 1011.

The connecting portion 12 and the mounting bracket 10 may be integrally formed, or the connecting portion 12 may be formed separately and then connected to the mounting bracket 10. For example, the mounting bracket 10 may be an injection-molded or cast bracket body, and the connecting portion 12 may be implemented as a screw structure. After the mounting bracket 10 is mounted to the mounting site 101, the screw structure passes through the arcuate groove 1011 from the second surface 101b and is connected to the mounting bracket 10. An end of the screw structure contacts the flange disposed around the arcuate groove 1011, and the flange prevents the screw structure from passing entirely through the arcuate groove 1011, thereby movably mounting the mounting bracket 10 to the mounting site 101.

In an optional embodiment, the edge trimming assembly 200 further comprises a cutter 20 mounted on the mounting bracket 10 and extending out of the mounting site 101 so as to cut grass located at a boundary or a corner.

In an optional embodiment, the edge trimming assembly 200 comprises a power source configured to drive the cutter 20 to perform cutting. The power source is mounted on the mounting bracket 10 and outputs driving force to the cutter 20 to control the cutting motion of the cutter 20, thereby enabling the cutter 20 to cut grass at a boundary or a corner.

By way of example, the power source comprises a drive motor 30. The mounting site 101 is provided with a mounting hole 1012, and the mounting bracket 10 is provided with a motor fixing portion 11. The drive motor 30 is mounted in the motor fixing portion 11 and extends through the mounting hole 1012 so as to output rotational force.

Specifically, the mounting hole 1012 is concentric with the arcuate groove 1011. That is, during rotation of the mounting bracket 10 along the arcuate groove 1011 via the connecting portion 12, the drive motor 30 rotates about a central axis of the mounting hole 1012. By adopting this technical solution, the drive motor 30 is concealed in the mounting hole 1012, ensuring stable installation of the drive motor 30. This prevents the drive motor 30 from shaking due to collisions between the edge trimming assembly 200 and obstacles, lowers the center of gravity of the mounting bracket 10, prevents impact vibration from affecting the drive motor 30, improves the stability of the lawn mower, and prolongs the service life of the lawn mower.

It should be noted that the cutter 20 may be implemented as a scissor-type structure, or it may be implemented as a blade or a nylon-cord structure. This disclosure is not limited thereto.

In an optional embodiment, the edge trimming assembly 200 comprises a housing 40, and the housing 40 covers an outer side of the cutter 20 so as to protect the cutter 20.

In an optional embodiment, the lawn mower further comprises a switch member 400 disposed on the mounting site 101 and electrically connected to the edge trimming assembly 200, such that the switch member 400 cooperates with the edge trimming assembly 200 to stop operation when the edge trimming assembly 200 switch to the folded state and to resume operation when the edge trimming assembly 200 switch to the unfolded state.

By way of example, when the switch member 400 detects that the edge trimming assembly 200 is in the unfolded state, the lawn mower controls the drive motor 30 to operate so as to cut grass located at a boundary or a corner. When the switch member 400 detects that the edge trimming assembly 200 is in the folded state, the lawn mower controls the drive motor 30 to stop operating, thereby preventing the edge trimming assembly 200 from causing injury to the operator.

In an optional embodiment, the switch member 400 is disposed at an end of the arcuate groove 1011, and a spring plate is provided on the connecting portion 12. The spring plate is configured to cooperate with a switch contact of the switch member 400, and also provides a buffering function to prevent the connecting portion 12 from directly impacting the switch contact of the switch member 400, which is particularly important because the elastic force of the elastic assembly 300 may otherwise damage the switch member 400.

In an optional embodiment, the switch member 400 is implemented as a travel switch disposed on the mounting site 101 at one end of the arcuate groove 1011. The switch member 400 is configured to output a position-reached signal indicating that the edge trimming assembly 200 has reached the folded state, so that the drive motor 30 can be controlled to stop operating. When the edge trimming assembly 200 is separated from the switch member 400, the drive motor 30 continues operating, indicating that the edge trimming assembly 200 is in the unfolded state.

In the description of the present disclosure, it should be noted that, unless otherwise expressly specified or limited, the terms "mounted," "connected," and "coupled" are to be understood in a broad sense. For example, such terms may refer to fixed connections, detachable connections, or integral connections. They may refer to mechanical connections or electrical connections. They may refer to direct connections or indirect connections through an intermediate component, or to communication between components or interaction between components. Those of ordinary skill in the art can understand the specific meaning of these terms in the present disclosure based on the particular context.

In the present disclosure, unless otherwise expressly specified or limited, the expressions indicating that a first feature is "on," "above," or "over" a second feature may include cases in which the first and second features are in direct contact, as well as cases in which the first and second features are not in direct contact but are in contact through another feature located between them. Moreover, the expressions indicating that the first feature is "on," "above," or "over" the second feature may include cases in which the first feature is directly or obliquely above the second feature, or merely indicate that the first feature is at a higher elevation than the second feature. Similarly, the expressions indicating that the first feature is "under," "below," or "beneath" the second feature may include cases in which the first feature is directly or obliquely below the second feature, or merely indicate that the first feature is at a lower elevation than the second feature.

The foregoing disclosure provides numerous different embodiments or examples for implementing various structures of the present disclosure. To simplify the disclosure, components and arrangements of specific examples have been described. Of course, these examples are merely illustrative and are not intended to limit the present disclosure. In addition, the present disclosure may repeat reference numerals and/or reference letters in different examples. Such repetition is for the purpose of simplicity and clarity and does not, in itself, indicate any relationship between the various embodiments and/or arrangements being discussed. Moreover, specific processes and materials have been described in the examples provided herein; however, those of ordinary skill in the art will understand that other processes and/or materials may also be used.

In the description of this specification, the terms "one embodiment," "some embodiments," "illustrative embodiment," "example," "specific example," or "some examples" mean that the specific features, structures, materials, or characteristics described in association with an embodiment or example are included in at least one embodiment or example of the present disclosure. In the present specification, the schematic representations of the above terms do not necessarily refer to the same embodiment or example. Furthermore, the specific features, structures, materials, or characteristics described may be combined in any suitable manner in one or more embodiments or examples.

## Claims

1. A lawn mower, comprising:
a mower body, comprising a mounting site at a side of the mower body, the mounting site being provided with an arcuate groove and a fixing portion;
an edge trimming assembly, comprising a mounting bracket, the mounting bracket being provided with a connecting portion, the connecting portion extending into the arcuate groove and being configured to slide in the arcuate groove so as to drive the edge trimming assembly to switch between an unfolded state and a folded state; and
an elastic assembly, two ends of the elastic assembly being movably connected to the fixing portion and the connecting portion respectively, wherein the elastic assembly always provides an elastic force in a direction to the connecting portion so as to drive the edge trimming assembly to switch toward the unfolded state or the folded state.

2. The lawn mower of claim 1, wherein the arcuate groove comprises a first groove and a second groove disposed opposite to the first groove, the first groove and the second groove being concentric and spaced apart, and wherein the connecting portion comprises a first connecting post and a second connecting post, the first connecting postand the second connecting post being respectively disposed corresponding to the first groove and the second groove so as to movably mount the mounting bracket on the mounting site.

3. The lawn mower of claim 1, wherein the elastic assembly comprises an elastic member, a first connecting member, and a second connecting member sleeved over the first connecting member, the first connecting member being connected to the fixing portion, the second connecting member being connected to the connecting portion, and the elastic member being disposed between the first connecting member and the second connecting member.

4. The lawn mower of claim 1, wherein the mounting site is provided with a limiting portion, the limiting portion being located on two sides of a movement direction of the mounting bracket.

5. The lawn mower of claim 4, wherein the mounting site comprises a first surface and a second surface that are disposed opposite to each other, the limiting portion being disposed on the first surface, and the fixing portion being disposed on the second surface.

6. The lawn mower of claim 1, wherein the mounting site is provided with a flange, the flange being disposed around an outer periphery of the arcuate groove.

7. The lawn mower of claim 1, wherein the edge trimming assembly comprises a cutter, the cutter being mounted on the mounting bracket and projecting outward from the mounting site.

8. The lawn mower of claim 7, wherein the edge trimming assembly further comprises a drive motor configured to drive the cutter to perform cutting, the mounting site being provided with a mounting hole, the mounting hole being disposed concentrically with the arcuate groove, and the drive motor extending through the mounting hole.

9. The lawn mower of claim 1, wherein the lawn mower further comprises a switch member, the switch member being disposed on the mounting site and electrically connected to the edge trimming assembly, the switch member cooperating with the edge trimming assembly to stop operation of the edge trimming assembly when the edge trimming assembly switch to the folded state, and to resume operation of the edge trimming assembly when the edge trimming assembly switch to the unfolded state.

10. The lawn mower of claim 9, wherein the switch member is disposed at an end of the arcuate groove, the connecting portion being provided with an elastic piece, the elastic piece being configured to cooperate with a switch contact of the switch member.

11. A lawn mower, comprising:
a mower body, comprising a mounting position at a side of the body, the mounting position being provided with an arcuate groove and a fixing portion;
an edge trimming assembly, comprising a mounting bracket, the mounting bracket being provided with a connecting portion, the connecting portion extending into the arcuate groove and being configured to slide in the arcuate groove so as to drive the edge trimming assembly to transition between an unfolded state and a folded state; and
an elastic assembly, the elastic assembly being disposed between the mounting bracket and the mower body and being configured to buffer an impact force applied to the edge trimming assembly.

12. The lawn mower of claim 11, wherein two ends of the elastic assembly are movably connected to the fixing portion and the connecting portion, respectively; and wherein when the edge trimming assembly switches between the unfolded state and the folded state, the elastic assembly first provides a resistance to movement of the edge trimming assembly and subsequently provides a pushing force to the edge trimming assembly.

13. The lawn mower of claim 12, wherein two ends of the elastic assembly are movably connected to the fixing portion and the connecting portion, respectively, and wherein the elastic assembly continuously maintains an elastic force in a direction from the fixing portion toward the connecting portion.

14. The lawn mower of any one of claims 11 to 13, wherein the arcuate groove comprises a first groove and a second groove disposed opposite to the first groove, the first groove and the second groove being concentric and spaced apart, and wherein the connecting portion comprises a first connecting post and a second connecting post, the first connecting post and the second connecting post being respectively disposed corresponding to the first groove and the second groove so as to movably mount the mounting bracket on the mounting position.

15. The lawn mower of any one of claims 11 to 13, wherein the elastic assembly comprises an elastic member, a first connecting member, and a second connecting member sleeved over the first connecting member, the first connecting member being connected to the fixing portion, the second connecting member being connected to the connecting portion, and the elastic member being disposed between the first connecting member and the second connecting member.

16. The lawn mower of any one of claims 11 to 13, wherein the mounting position is provided with a limiting portion, the limiting portion being located on two sides of a movement direction of the mounting bracket.

17. The lawn mower of claim 16, wherein the mounting position comprises a first surface and a second surface that are arranged opposite to each other, the limiting portion being disposed on the first surface, and the fixing portion being disposed on the second surface.

18. The lawn mower of any one of claims 11 to 13, wherein the edge trimming assembly comprises a cutter, the cutter being mounted on the mounting bracket and protruding out of the mounting position.

19. The lawn mower of claim 18, wherein the edge trimming assembly further comprises a drive motor configured to drive the cutter to perform cutting, the mounting position being provided with a mounting hole, the mounting hole being disposed concentrically with the arcuate groove, and the drive motor extending through the mounting hole.

20. The lawn mower of any one of claims 11 to 13, wherein the lawn mower further comprises a switch member, the switch member being disposed on the mounting position and electrically connected to the edge trimming assembly, the switch member cooperating with the edge trimming assembly to stop operation of the edge trimming assembly when the edge trimming assembly switches to the folded state, and to resume operation of the edge trimming assembly when the edge trimming assembly switches to the unfolded state.
